# EUROPÄISCHE PATENTANMELDUNG

(11) **EP 2 738 726 A1**
(43) Veröffentlichungstag der Anmeldung: **04.06.2014**
(21) Anmeldenummer: 13170857.0
(22) Anmeldetag: 06.06.2013
(51) Int. Cl.: G06Q 30/02, G01C 21/20

(54) **Anzeigesystem für Messen**

(30) Priorität: 03.12.2012 EP 12195314
(71) Anmelder: Pave GmbH, 90431 Nürnberg (DE)
(72) Erfinder: Boegner, Thilo, 90765 Fürth (DE)
(74) Vertreter: Götz, Georg Alois

(57) **Zusammenfassung**

Bein einem Verfahren zum Betreiben eines Anzeigesystems (6) für ein Veranstaltungsgelände (2) werden die Ortsdaten aller Veranstaltungsbereiche (4a-e) in einem Geländeplan (36), die Ortsdaten aller Anzeigegeräte (8a-g) in einem Anzeigenplan (42), und Informationen zu Veranstaltungen in einer Veranstaltungsliste (46) gespeichert. Anhand eines Ortskriteriums (52) wird ermittelt, ob Informationen auf einem Anzeigegerät (8a-g) anzuzeigen sind, anhand eines Inhaltskriteriums (54) wird ein Anzeigeinhalt (56) für das Anzeigegerät (8a-g) ermittelt und zur Anzeige bereitgestellt.

Ein Anzeigesystem (6) mit einer Mehrzahl von Anzeigegeräten (8a-g) enthält eine Datenbank mit dem Geländeplan (36), dem Anzeigenplan (42) und der Veranstaltungsliste (46), und einen Steuerserver (16), um mit Hilfe des Ortskriteriums (52) und des Inhaltskriteriums (54) den Anzeigeinhalt (56) zur Anzeige am Anzeigegerät (8a-g) bereitzustellen.

In einem Verfahren zum Betreiben eines Anzeigesystems (6) wird ein Routing-Algorithmus verwendet. In einem Anzeigesystem (6) wird eine Grafik-Render-Engine (62) verwendet.

## Beschreibung

Die Erfindung betrifft ein Anzeigesystem mit einer Mehrzahl von Anzeigegeräten, ein Verfahren zu dessen Betreiben, die Verwendung eines Routing-Algorithmus in einem entsprechenden Verfahren und die Verwendung einer Grafik-Render-Engine in einem entsprechenden Anzeigesystem.

Ein in Rede stehendes Anzeigesystem weist eine Mehrzahl von Anzeigegeräten auf, wobei die Anzeigegeräte über ein Veranstaltungsgelände verteilt sind. Das Veranstaltungsgelände weist verschiedene Veranstaltungsbereiche auf. Die Anzeigegeräte sind an jeweiligen Anzeigeorten platziert. Die Veranstaltungsbereiche befinden sich an jeweiligen Veranstaltungsorten. Im Veranstaltungsgelände finden verschiedene Veranstaltungen statt. Die Anzeigegeräte dienen zur Kommunikation von Informationen an Besucher des Veranstaltungsgeländes, insbesondere derart, wo und wann welche Veranstaltungen (Messen, Events) stattfinden.

Ein Veranstaltungsgelände im Sinne der vorliegenden Erfindung ist ein Areal, z.B. ein Messezentrum, ein Veranstaltungs-Freigelände, ein Stadion oder ein Einkaufszentrum, in dem Veranstaltungen in Form von Events stattfinden. Das Anzeigesystem umfasst einen Steuerserver, der die Anzeigegeräte zur Anzeige von Informationen ansteuert. Unter Anzeigegeräten sind alle elektrisch steuerbaren Anzeigegeräte zu verstehen, die nach ihrem jeweiligen Zweck Informationen elektronisch anzeigen können. In der Regel sind dies Bildschirme bzw. Displays oder auch elektromechanische Anzeigetafeln. Unter einem Display ist also ein Anzeigemedium zu verstehen, z. B. ein LCD-, LED-Display oder eine LED-Wand. Im Folgenden wird die Erfindung ohne Beschränkung der Allgemeingültigkeit anhand eines Messegeländes beispielhaft erläutert.

Derartige Anzeigesysteme sind unter dem Begriff "Digital Signage" bekannt. Bei dem bekannten Anzeigesystem "redcat" der Firma ICT Innovative Communication Technologies AG werden für jedes einzelne Anzeigegerät Bild- bzw. Filmdateien in einen Management-PC eingegeben, der diese zur Anzeige auf die betreffenden Anzeigegeräte sendet. Die Bild- bzw. Filmdateien werden außerhalb des eigentlichen Anzeigesystems vorab fertig gestellt. Ändert sich eine anzuzeigende Information, wird extern eine neue Bild-oder Filmdatei erzeugt, in das Anzeigesystem geladen und angezeigt. Ändert sich also beispielsweise bei einer Messe der Titel einer Veranstaltung, so müssen von einem Messedisponenten zunächst diejenigen Displays ermittelt werden, auf welchen die betreffende Veranstaltung angezeigt werden soll bzw. angezeigt wird. Sodann muss das Anzeigebild jedes einzelnen betroffenen Displays extern neu erzeugt werden und anschließend die geänderten Anzeigebilder in das Anzeigesystem geladen und an sämtliche betroffenen Anzeigegeräte übermittelt werden. Insbesondere bei häufigen oder kurzfristigen Änderungen ist dieses Verfahren aufwendig und daher nur begrenzt zeitnah ausführbar.

Aufgabe der vorliegenden Erfindung ist es, ein verbessertes Anzeigesystem sowie ein verbessertes Verfahren zu dessen Betreiben anzugeben.

Hinsichtlich des Verfahrens wird die Aufgabe gelöst durch ein Verfahren gemäß Patentanspruch 1 zum Betreiben einer Mehrzahl von Anzeigegeräten eines Anzeigesystems, die über ein Veranstaltungsgelände mit verschiedenen Veranstaltungsbereichen verteilt an jeweiligen Anzeigeorten platziert sind. Die Veranstaltungsbereiche befinden sich an Veranstaltungsorten. Im Veranstaltungsgelände finden verschiedene Veranstaltungen statt. Gemäß dem Verfahren werden in einem Schritt a) die Ortsdaten aller Veranstaltungsorte in einem Geländeplan gespeichert. Weiterhin werden in einem Schritt b) die Ortsdaten aller Anzeigeorte in einem Anzeigenplan gespeichert. Für jede Veranstaltung wird in Schritt c) außerdem ein Datensatz in einer Veranstaltungsliste gespeichert, die somit einen Eventkalender darstellt. Der Eventkalender gibt die zeitliche und räumliche Planung mehrerer Einzelveranstaltungen in einem Kalender wieder. Der Datensatz enthält dabei den Veranstaltungsbereich, die Veranstaltungszeit und den Veranstaltungsinhalt der betreffenden Veranstaltung. In einem Schritt d) werden wenigstens immer dann, wenn in einem der Datensätze eine Veränderung stattfindet, für jedes einzelne der Anzeigegeräte folgende Schritte ausgeführt:

Der im jeweiligen Datensatz gespeicherte bzw. damit korrelierte Veranstaltungsort der Veranstaltung und der im Anzeigenplan gespeicherte Anzeigeort des jeweiligen Anzeigegerätes werden hinsichtlich eines Ortskriteriums in Schritt d1) ausgewertet, um zu ermitteln, ob zumindest ein Teil der Informationen, welche im Datensatz gespeichert sind, auf dem jeweiligen Anzeigegerät anzuzeigen ist. Außerdem wird in Schritt d2) aus dem jeweiligen Datensatz anhand eines Inhaltskriteriums ein Anzeigeinhalt für das jeweilige Anzeigegerät ermittelt. Der ermittelte Anzeigeinhalt wird anschließend in Schritt e) zur Anzeige am Anzeigegerät bereitgestellt. In der Regel werden die Anzeigeinhalte dann, insbesondere sofort bzw. direkt, auf den betreffenden Anzeigegeräten auch tatsächlich angezeigt.

Mit anderen Worten wird mit Hilfe des Ortskriteriums festgestellt, ob das aktuell betrachtete Anzeigegerät für den betrachteten Datensatz bzw. dessen veränderten Inhalt relevant ist. Dies ist z.B. der Fall, wenn die betreffenden Informationen aus dem Datensatz potentiell an diesem Display angezeigt werden sollen, da es z.B. am Veranstaltungsort, d.h. -bereich oder auf einem Weg von einem Eingang dorthin liegt. Das Ortskriterium entscheidet mit anderen Worten, ob die Information am Anzeigeort angezeigt werden soll.

Das Inhaltskriterium dient dann dazu, den tatsächlich zur Anzeige relevanten Inhalt für das Anzeigegerät aus dem bzw. anhand der Informationen des Datensatzes zu ermitteln. Hierbei kann der angezeigte Inhalt in der Regel verändert, gegebenenfalls aber auch unverändert sein. Das Inhaltskriterium ist für verschiedene Anzeigegeräte z.B. unterschiedlich. Hier wird also geprüft, welche Inhalte an welchen Displays angezeigt werden sollen. So werden z.B. direkt an einem Veranstaltungsbereich am Display Detailinformationen angezeigt, an einem entfernten Display dagegen nur Basisinformationen zur Veranstaltung. Mit anderen Worten werden also z.B. Veranstaltungsinhalte detailliert nur direkt am Veranstaltungsbereich wiedergegeben. Das Inhaltskriterum kann auch als Filter verstanden werden, das aus allen im Datensatz zu einer Veranstaltung verfügbaren Informationen nur diejenigen herausfiltert, die zum betreffenden Zeitpunkt an einem bestimmten Anzeigegerät angezeigt werden sollen.

Den anzuzeigenden Informationen, also dem logischen Anzeigeinhalt wird ggf. das passende Layout auf dem passenden Medium, d.h. dem entsprechenden Anzeigegerät, zugeordnet, sodass die Informationen zum richtigen Zeitpunkt an den relevanten Stellen auf dem Messegelände optisch ansprechend gemäß den Layoutvorgaben angezeigt werden. Ein Anzeigesystem umfasst verschiedene Ausgabemedien, die sich als Einheit eines Anzeigegerätes, des darauf befindlichen Layouts und der damit verbundenen Datenbasis mit der enthaltenen Information darstellen. Für Messebesucher sind die Ausgabemedien Wegweiser und Mittel, gezielt Informationen einzuholen. Da Besucher an verschiedenen Orten auch unterschiedliche Informationen benötigen, sind die Ausgabemedien je nach Standort im Veranstaltungsgelände und Zweck unterschiedlich gestaltet und anhand der Inhaltskriterien mit unterschiedlichen Informationen zu ein und demselben Datensatz ausgestattet.

Im Schritt d) kann in einem weiteren Schritt optional auch noch anhand eines Zeitkriteriums untersucht werden, ob der veränderte Inhalt des Datensatzes zur aktuellen Zeit überhaupt an mindestens einem der Anzeigegeräte anzuzeigen ist. Ist dies nicht der Fall, müssen die Schritte d1) und d2) z.B. gar nicht ausgeführt werden.

Das Anzeigesystem kann beispielsweise derart ausgestaltet sein, dass jeweils nur aktuelle Einträge, die auch tatsächlich anzuzeigen sind in die Datenbank aufgenommen werden. Ein neuer Eintrag in der Datenbank ist dann als Veränderung in mindestens einem der Datensätze zu sehen und führt automatisch zu einer Aktualisierung der relevanten Anzeigen. Alternativ werden eine Vielzahl von Veranstaltungen in den Datensätzen verwaltet, welche auch in der Vergangenheit oder Zukunft liegen können. Zusätzlich können die beiden Schritte d1) und d2) auch aufgrund anderer Ereignisse durchgeführt werden, z.B. zeitgesteuert, insbesondere periodisch oder auch auf ein Anforderungssignal eines Anzeigegerätes hin.

Die Anzeige der zur aktuellen Zeit tatsächlich auf den Anzeigegeräten anzuzeigenden Inhalte erfolgt in der Regel durch eine separate Zeitsteuerung in chronologischer Abfolge. Dies erfolgt unabhängig vom eigentlichen Verfahren, da dieses in seiner Grundform nur auf sich ändernde Inhalte abzielt. D.h. Inhalte, die unverändert in der Datenbank gespeichert sind, werden dennoch in chronologischer Weise nacheinander auf den Displays angezeigt. Z.B. wenn eine erste Veranstaltung endet und eine zweite beginnt, wird die Anzeige eines Raumdisplays einfach zeitgesteuert von einer Beschilderung der ersten Veranstaltung zu einer Beschilderung der zweiten Veranstaltung geändert.

Zumindest die Verfahrensschritte d) und e) werden in der Regel vollautomatisch durch einen Steuerrechner bzw. ein darin implementiertes Computerprogramm ausgeführt. Im Verfahren werden also die von Benutzern eingegebenen Daten zu Veranstaltungen in der Datenbank gespeichert. Eine Prozesslogik, die in der Regel in einem Steuerrechner als Programm abläuft, ermittelt dann, auf welchen Displays diese Daten veröffentlicht werden und bereitet sie zur Weitergabe vor, d.h. stellt die Anzeigeinhalte bereit. Zur Gewährleistung eines reibungslosen Informationsaustauschs verwaltet der Steuerserver insbesondere auch die Anzeigegeräte bzw. Darstellungsrechner, die diese bedienen, das Areal und Layouts (Anzeigeformate) für die einzelnen Anzeigegeräte.

Die Erfindung bietet den Vorteil, dass Informationen, die eine Veranstaltung betreffen, so verarbeitet werden, dass sie automatisiert auf genau den Anzeigegeräten angezeigt werden, für die sie relevant sind. Dies ist möglich durch die Anpassung der Orts- und Inhaltskriterien, die die logischen Regeln beinhalten, welche Informationen auf welchen Displays angezeigt werden sollen. Eine händische Auswahl der Anzeigegeräte und der anzuzeigenden Informationen im Einzelfall ist nicht mehr nötig, wenn einmal die Kriterien festgelegt sind. Außerdem können die Anzeigeinhalte auf den Anzeigegeräten automatisch angezeigt werden. Dies kann durch direkte Anzeige der Anzeigeinhalte (Anzeigeinhalt wird in Textform angezeigt) oder durch deren Zwischenverarbeitung (Anzeigeinhalt wird durch ein Layout in ein graphisches Anzeigebild/Film/Animation gewandelt und letzteres angezeigt) erfolgen.

Etwaige Änderungen im angezeigten Inhalt können dank des Verfahrens in Echtzeit in Bezug auf deren Eingabe angezeigt werden, sodass für Besucher des Veranstaltungsgeländes immer der aktuelle Stand der Informationen verfügbar ist, d.h. angezeigt wird. Unter "Echtzeit" ist hier die Verarbeitung der Information durch das Verfahren gemeint, die in der Regel im Bereich von Millisekunden bis Sekunden ausführbar ist. Die Verzögerung zwischen Eingabe und Anzeige ist also lediglich durch die Verarbeitung im Anzeigesystem, d.h. einem Computersystem, bedingt.

Die Prozesslogik im Steuerserver ermittelt also, welche Veranstaltungen momentan ausgeschildert, also Informationen hierzu angezeigt werden sollen. Dazu wendet sie z.B. auch eine zeitliche Filterung an. Relevante Anzeigegeräte ermittelt die Prozesslogik z.B. anhand von Arealbereichen, in denen sich überhaupt Besucher befinden können. Dies geschieht z.B. anhand Gelände- und Anzeigenplan und den Datensätzen. Daraus resultiert auch, welche Displays angesteuert werden, d.h. für welche Displays Anzeigeinhalte erzeugt werden. Die eingespeisten Daten werden also durch das Verfahren, insbesondere den Steuerserver verwaltet und bei Änderung den relevanten Darstellungsrechnern bzw. Anzeigegeräten zugeordnet. Alternativ oder zusätzlich kann der Verfahrensschritt d) aber auch auf Anfrage eines Displays hin (Polling) oder auch zeitgesteuert, z.B. zyklisch ausgelöst werden. Auch so werden bei jeder Abarbeitung des Verfahrens veränderte Inhalte an die relevanten Displays übertragen. Mit anderen Worten hält der Steuerserver dann z.B. stets aktuelle Anzeigeinhalte bereit oder liefert diese auf Anfrage, die Displays holen diese von sich aus zur Anzeige ab. Unterschiedliche Anzeigegeräte können so unterschiedlich oft aufgefrischt werden. Z.B. muss ein Großdisplay nur geändert werden, wenn sich eine Messe ändert. Ein Raumdisplay muss z.B. halbstündlich bei wechselnden Vorträgen verändert werden.

Da sämtliche nachfolgenden Schritte vollautomatisch ablaufen können, werden Änderungen, z.B. im Ablauf einer Veranstaltung, nach der Eingabe in den betreffenden Datensatz sekundenschnell vom Anzeigesystem als veränderte Anzeigeinhalte bereitgestellte, sodass z.B. Raumauszeichnungen oder Wegweiser als Anzeigeinhalte mit nur wenigen Handgriffen, d.h. durch eine einzige zentrale Eingabe in die Veranstaltungsliste, automatisch jederzeit aktuelle Angaben in Form des Anzeigeinhalts auf den Anzeigegeräten liefern. Denn das Anzeigesystem verarbeitet neue Informationen automatisch für alle Displays, die von etwaigen Änderungen betroffen sind.

Der Eventkalender bzw. die Veranstaltungsliste in der Datenbank ist nach einmaliger Befüllung kein geschlossenes Konstrukt. Änderungen können jederzeit vorgenommen werden. So haben Messebetreiber und Veranstalter jederzeit die Möglichkeit zur Kontrolle, zur organisatorischen Kommunikation und zur Gewährleistung jederzeit aktueller Information für die Besucher. Eingaben erfolgen insbesondere über Auswahlfelder, wenn die Eingabe bestimmte inhaltliche oder formelle Kriterien erfüllen muss (z. B. Hallen-oder Raumbezeichnungen bzw. Uhrzeiten) oder ansonsten über Textfelder. Der bearbeitende Benutzer erhält bei seiner Eingabe vorzugsweise eine Vorschau der Anzeigegeräte, auf denen seine Eingaben erscheinen. Das prinzipielle Verfahren wird also bereits durchgeführt, die bereitgestellten Anzeigeinhalte aber nicht an die Anzeigegeräte weitergeleitet, sondern in einem Vorschaumodus dem Benutzer angezeigt. Das Verfahren besitzt also nicht nur die Eigenschaft, Informationen gezielt auf relevante Anzeigegeräte zu leiten, sondern es ist außerdem erweiterungsfähig und flexibel. Es nimmt Eingaben von beliebig vielen Benutzern an und bereitet die Informationen für eine beliebige Anzahl von Displays auf.

Entscheidend für das Verfahren ist, dass es veranstaltungsorientiert arbeitet und nicht anzeigenorientiert. Gepflegt wird im regulären Betrieb "lediglich" die Korrektheit der Eventinformationen im Eventkalender. Die Auswahl der Displays für die Anzeige der Informationen und des Informationsinhalts, der auf einzelnen Displays angezeigt wird, erfolgt automatisch durch die Verfahrensalgorithmen, also im Wesentlichen nach den Orts- und Inhaltskriterien.

Das Verfahren beinhaltet in den Schritten a) und b) die Erfassung der bestehenden Struktur bzw. Topologie des Veranstaltungsgeländes. Um ein Anzeigesystem in Form eines intelligenten und leicht zu verwaltenden Informations- und ggf. Navigationssystems für ein Veranstaltungsgelände zu installieren, muss dieses Areal zunächst topologisch erfasst werden. Grundsätzlich werden zur Orientierung von Besuchern Veranstaltungsbereiche mit Nummern (Hallen-, Raum-, Ebenennummern) oder Namensbezeichnungen (Saal "München", Raum "Ohm") versehen. Diese Informationen werden in der Regel in den Anzeigen- und Geländeplan übernommen. Bei der Eingabe von Datensätzen, also von Parametern zu z.B. Messen und Veranstaltungen, können diese einfach der entsprechenden Örtlichkeit zugeordnet werden und als aufbereitete Information in Form des Anzeigeinhalts an Messebesucher weitergegeben werden. Hierbei wird das Areal z.B. in einer hierarchischen Struktur in Bereiche, Gebäude, Ebenen und Räume gegliedert, wobei auch Hallen und Räume noch in beliebig in Organisationseinheiten geteilt werden können. Ein Bereich ist dabei als gegliederter Teil des Veranstaltungsgeländes zu verstehen. Die Erfassung der bestehenden Struktur im Verfahren erfolgt insbesondere einmalig und wird nur angepasst, wenn sich diese Struktur dauerhaft ändert. In diesem Fall kann sie unbegrenzt erweitert werden.

Zusätzlich erfasst das Verfahren im Gelände- und Anzeigenplan das Areal in Koordinaten (Position eines Punktes im 3D-Raum), durch die es in der Lage ist, jeden Punkt des Areals, und damit alle Veranstaltungs- und Anzeigeorte exakt zu lokalisieren. Die Erfassung der relevanten Punkte in Koordinaten dient auch als Basis für eine zuverlässige und komfortable Navigation in Form von Richtungsangaben als Anzeigeinhalte.

Die Koordinaten enthalten dabei z.B. drei Werte: Der erste entspricht einer x-Koordinate, z.B. der östlichen Entfernung vom Nullpunkt des Koordinatensystems, z.B. dem südwestlichen Eckpunkt des Areals. Hierzu kann auch ein Arealplan genutzt werden. Der zweite Wert entspricht dann einer y-Koordinate, z.B. der nördlichen Entfernung des Punktes vom Nullpunkt. Der Dritte Wert gibt dann eine z-Koordinate, z.B. die Höhe des Punktes über dem Nullpunkt, z.B. eine Gebäudeebene, Etage, Stockwerk an.

Dieses Koordinatensystem deckt das komplette Areal ab: Hallen und Kongressbereiche inklusive Räume, Übergänge und Flure. Auch weitere relevante Punkte des Areals, wie z.B. Türen, Hallenzentren, Anzeigen-und Terminalstandorte für optionale Eingabeterminals des Anzeigesystems etc., werden im Gelände- und Anzeigeplan erfasst.

Die Einspeisung der relevanten Punkte in den Gelände- und Anzeigenplan ist eine einmalig zu verrichtende Aufgabe. Die Angaben werden insbesondere nur angepasst, wenn sich die Beschaffenheit des Areals dauerhaft ändert.

In der Praxis werden z.B. die vom Areal bereits vorhandenen Pläne in einem CAD-Programm (Computer-Aided Design, Zeichenprogramm für Technische Pläne) geöffnet und auf einem zusätzlichen Layer (Schicht / Datenfilter) durch neu erfasste Wege ergänzt. Die Daten dieses Layers werden nach dem Abgleich herausgelöst und als Gelände- und Anzeigeplan in das Verfahren eingebracht.

Eine enorme Arbeitserleichterung im Verfahren ergibt sich, wenn optional Schnittstellen zu Komponenten genutzt werden, die an sich kein Bestandteil des Anzeigesystems sind. Durch den Import von dort bereits erfassten Daten werden im Verfahren den Benutzern zahlreiche manuelle Eingaben erspart. Ist z.B. bereits ein Dispositionsprogramm (Programm zum Verwalten von Konferenzräumen und Veranstaltungsstätten) für das Veranstaltungsgelände im Einsatz, z.B. bei einem Messebetreiber für die Belegung seiner Messe, kann im Verfahren eine vorhandene Datei mit dem bereits gespeicherten Belegungsplan der genutzten Arealabschnitte mit der Datenbank synchronisiert werden. So können auch einzelne Messestände ohne weiteren Aufwand für den Organisator in das Verfahren integriert werden.

Ist z.B. eine Website zu einer Veranstaltung vorhanden, beispielsweise eine Messe-Website, so kann diese relevante Daten, wie zum Beispiel ein Logo in passender Auflösung oder Informationen über Aussteller und ihnen zugeordnete Detailinformationen enthalten. Im Verfahren können dann entsprechende Daten direkt von der Messe-Website in die Datenbank importiert werden. Eine manuelle Eingabe ist somit nicht mehr nötig. Hierfür ist lediglich eine Programmierschnittstelle zu definieren.

Das Verfahren ermöglicht ein wertvolles Management- und Informationssystem für Veranstaltungen. Das Verfahren kann exakt auf Kundenansprüche angepasst werden. Die Flexibilität des Verfahrens erlaubt zahllose individuelle Anpassungen. Das Verfahren ermöglicht ein Managementsystem für Veranstaltungsgelände das mehrere hundert Informationsdisplays in Form von Anzeigegeräten für einen kleinen Personenkreis kontrollierbar macht. Alle Informationen können in die Datenbank eingegeben werden und die Prozesslogik erzeugt ihre darstellende Wiedergabe automatisch und in Echtzeit auf den Anzeigegeräten, auf denen sie Besuchern des Geländes von Nutzen sind.

Das Verfahren minimiert für die Benutzer erstmalig den Bedarf an Kontrolle und Bearbeitung der Informationswiedergabe, weil es automatisch für die Anzeigegeräte deren Inhalte ermittelt. Veränderungen in der Datenbank werden augenblicklich mit vorhandenen Informationen abgeglichen und auf alle relevanten Anzeigegeräte übertragen - ohne diese bewusst auswählen bzw. ansteuern zu müssen. Somit macht das Verfahren Veranstaltungen wie z.B. Messen und Events für Besucher überschaubarer und erlebbarer und verkürzt Arbeitsaufwand und -wege für den Organisationsstab.

Die Erfindung lässt sich sinngemäß auch auf beispielsweise Hotels, Ämtergebäude, Schulen oder Flughäfen als "Veranstaltungsgelände" übertragen. In Hotels schildern die Anzeigegeräte dann z.B. Räume und deren aktuelle Belegung aus. In einem Ämtergebäude werden z.B. Zimmer ("Veranstaltungsbereiche") ausgeschildert, an denen bestimmte Dienstleistungen ("Veranstaltung") angeboten werden.

In einer bevorzugten Ausführungsform des Verfahrens wird anhand des Inhaltskriteriums zumindest ein Teil des Veranstaltungsinhalts als Anzeigeinhalt ermittelt. Mit anderen Worten werden auf dem Anzeigegerät also Informationen zum Veranstaltungsinhalt, wie z.B. Thema der Veranstaltung, Referentenname, Uhrzeit von Vorträgen usw. ermittelt. Durch das Verfahren wird sichergestellt, dass Änderungen in den betreffenden Veranstaltungsinhalten, wenn diese in der Datenbank eingetragen sind, augenblicklich automatisch als modifizierte Anzeigeinhalte zur Anzeige am Anzeigegerät bereitgestellt werden. Hierbei wird anhand des Ortskriteriums sichergestellt, dass die Informationen auch tatsächlich auf dem dafür bestimmten bzw. relevanten Anzeigegerät angezeigt werden.

In einer weiteren bevorzugten Ausführungsform wird anhand des Inhaltskriteriums als Anzeigeinhalt für das Anzeigegerät eine die Wegrichtung vom Anzeigeort des betreffenden Anzeigegerätes zum Veranstaltungsbereich anzeigende Information ermittelt. Die Information kann eine textuelle Beschreibung, ein Symbol, ein Richtungspfeil oder Ähnliches sein. Die Wegrichtung wird hierbei automatisch anhand der Ortsdaten aus Gelände- und Anzeigenplan ermittelt, da sowohl der Veranstaltungsort der Veranstaltung, als auch der Anzeigeort des betreffenden Anzeigegerätes sowie deren Relativlage zueinander bekannt sind.

In dieser Ausführungsform erlaubt das Verfahren ein innovatives, intelligentes Navigations- und Informationssystem, welches z.B. Messe- bzw. Standortbetreibern die Organisation, die Kommunikation und die Auszeichnung der Infrastruktur im Veranstaltungsgelände erleichtert. Die angezeigte Wegrichtung leitet zielsicher und stets aktuell den Weg zu Veranstaltungsbereichen wie Messeveranstaltungen, Hallen und Räumen. Durch die automatische Ermittlung der Wegrichtung anhand der Gelände- und Anzeigepläne passt sich das System automatisch dem Veranstaltungsgelände an, ohne dass Wegrichtungen händisch ermittelt werden müssen.

Die Ermittlung der Wegrichtung ist in der Regel auch im zentralen Steuerserver integriert. Ein derartiger Steuerserver mit Datenbank ist damit das Herzstück des Anzeigesystems. Hier kooperieren Eingabelogik, Prozesslogik, Wegeberechnung und Ausgabelogik mit den auf der Datenbank gespeicherten Informationen. Für jeden Anzeigeort spricht die Prozesslogik z.B. ein Modul "Wegeleitberechnung" an. Dieses errechnet für jedes aktive Anzeigegerät den Weg zu jedem relevanten Zielort. Der Anzeigeinhalt kann dabei bildlicher Natur sein. Für die passende bildliche Darstellung des Weges als Anzeigeinhalt auf jedem Anzeigegerät wird die auszuweisende Richtungsanzeige ermittelt, die z.B. als Treppen-/ Liftsymbol oder Pfeil wiedergegeben wird. Alle Daten zum Areal, die für die Wegeberechnung erforderlich sind, werden einmalig gespeichert und stehen somit für jede Veranstaltung zur Verfügung. Für z.B. Touchterminals oder mobile Geräte als Anzeigegeräte erstellt eine Prozesslogik im Steuerserver z.B. eine Animation eines von einem Besucher zurückzulegenden Weges zu einem Ziel.

Richtungsanzeigen auf den Anzeigegeräten errechnet der Steuerserver z.B. aus einer Wegfaktorangabe zwischen den Koordinaten des Anzeigegerätes und den Koordinaten der angezeigten Hallen in Form der Veranstaltungsorte. Diese Angabe stützt sich nicht allein auf die reine Berechnung der Entfernung, sondern zusätzlich auf relevanten Prioritäten (wie z. B. Hallenbefüllung, Überdachung von Wegen etc.) die automatisch durch Sensoren sowie manuell vom Organisator beeinflusst werden können.

In einer weiteren bevorzugten Ausführungsform wird die Wegrichtung vom Anzeigeort zum Veranstaltungsbereich anhand eines Routing-Algorithmus aus dem Geländeplan und dem Anzeigenplan ermittelt. Ein solcher Routing-Algorithmus ist z.B. der aus "http://de.wikipedia.org/wiki/Dijkstra-Algorithmus" bekannte Dijkstra-Algorithmus.

Wie erwähnt, sind die einmalig in Form des Gelände- und Anzeigenplans eingegebenen Räumlichkeiten in der Datenbank insbesondere hierarchisch geordnet, z.B. in Bereiche, Gebäude, Ebenen (Stockwerk/Level) etc. Durch die Zuordnung von Wegen zu den Räumlichkeiten können für die Wegeermittlung vorübergehende Beeinträchtigungen, etwa durch geschlossene Hallen, Reparaturen im Bereich von Türen, Sperrung von Durchgängen und ähnliches berücksichtigt werden. Denn wenn ein Arealabschnitt vorübergehend gesperrt ist, werden nach entsprechender Kennzeichnung des Abschnitts beim Routingverfahren alle dazugehörigen Punkte für die Wegeführung außer Acht gelassen. Da nach dieser Aufteilung auch Zuordnungen innerhalb eines Arealabschnittes, z.B. innerhalb einer Halle, möglich sind, können sich Sperrungen auch auf einzelne Bereiche jedes unterteilbaren Abschnittes beziehen.

Die für die Wegführung notwendigen Punkte werden z.B. in einer Tabelle gelistet. Die Verbindungen zwischen den einzelnen Punkten befinden sich z.B. in einer zweiten Tabelle als Wege mit errechnetem Streckenwert. Für die Wegeberechnung werden diese Verbindungswege lokalisiert und somit die günstigste Strecke zwischen Start- und Zielpunkt berechnet und in Echtzeit angezeigt. Dafür werden alle Teilstrecken zwischen dem Startpunkt und dem Zielpunkt miteinander verbunden, sodass in den meisten Fällen mehrere mögliche Verbindungen entstehen. Zeitgleich ermittelt der Routing-Algorithmus diejenige mit dem günstigsten Streckenwert, z.B. in der Regel die geringste Entfernung, und führt diese als entsprechenden Anzeigeinhalt für das entsprechende Anzeigegerät weiter.

Um den günstigsten Weg zwischen zwei Orten zu berechnen, wird jedoch insbesondere nicht allein die Entfernung beurteilt. Neben der Verfügbarkeit des Wegs und der zurückzulegenden Strecke existieren z.B. weitere Parameter, die über die Auswahl des möglichst günstigen Weges entscheiden: Dies können sein: Gangbreite (Breite eines publikumsrelevanten Weges; relevant für Besucherkapazität und Fluchtweg), Überdachung, Sensordaten (z.B. ob eine Tür verschlossen ist, Regensensor für einen Weg durch Freigelände), Passierbarkeit von Türen und eine Priorisierung. Die meisten der zugeordneten Werte sind in der Regel automatisiert. Allein die Priorisierung kann z.B. durch einen Organisator beeinflusst werden, wenn er beispielsweise die Aufmerksamkeit der Besucher auf ein bestimmtes Ausstellungsareal lenken möchte. Da eine solche subjektive Priorisierung keine erheblichen Umwege für die Besucher zur Folge haben darf, ist die Möglichkeit der Einflussnahme hier jedoch stark reglementiert.

Der Wegberechnung liegt z.B. ein Wegeleit-Algorithmus zugrunde, der alle möglichen Verbindungen zwischen Startpunkt und Zielpunkt berechnet, die als Koordinaten vorgegeben sind. Dafür greift das Verfahren auf die Tabelle mit den Wegen zurück und fasst die gesamten Streckenwerte jeder Verbindung mit den jeweils hinterlegten zusätzlichen Parametern zu einem Wert zusammen. So ergibt sich pro Verbindung ein Wert. Die Werte aller Verbindungen werden miteinander verglichen und der günstigste als so genannte Wegeliste ermittelt. Dieses Ergebnis interpretiert und verarbeitet das erfindungsgemäße Verfahren angepasst an das Anzeigegerät, für das es errechnet wurde, z.B. als Pfeil für eine Anzeige an einem Hallenübergang oder als Animation für ein Touchterminal.

Das intelligente Wegeleitsystem bildet gleichzeitig die Grundlage eines Navigationsservice für die Besucher. Diese können sich nach ihren Vorstellungen und Wünschen eine individuelle Route durch Messen und Events errechnen und anzeigen lassen.

In einer weiteren Ausführungsform des Verfahrens werden alle Anzeigegeräte jeweils einer von mindestens zwei Typklassen zugeordnet und mindestens ein Ortskriterium und/oder Inhaltskriterium wird für alle Anzeigegeräte einer bestimmten Typklasse gleich gewählt. Die Typklassen sind hierbei z.B. aufgaben-, inhalts- oder layoutorientiert gewählt. Z.B. werden gleiche Layoutsätze für die Informationsdarstellung auf allen Anzeigegeräten einer Typklasse verwendet. Dies hat den Vorteil, dass auf Displays einer Typklasse zwar nicht gleiche, aber gleichartige Informationen angezeigt werden. Z.B. zeigen Displays neben Eingangstüren zu Vortragsräumen immer die Vortragsinhalte an, inhaltlich jedoch verschieden je nach Raum. Displays an Weggabelungen zeigen immer Veranstaltungstitel und Richtungspfeile an, jedoch selbstverständliche verschiedene Titel.

Das Verfahren bedient in seiner Grundform verschiedenartige Medien als Anzeigegeräte, die z.B. Messebesuchern Information und Service bieten. So leiten z.B. Wegweiser zielsicher über den - in Verbindung mit dem beschriebenen Routing "vernünftigsten" - Weg zu Messeveranstaltungen, Hallen und Räumen. Touchterminals bieten Messebesuchern sogar einen durchdachten Routenplaner. Erfragte Wege werden im Verfahren selbstständig analysiert und die günstigste Verbindung bestimmt. Die allgemein vom Verfahren bedienten Anzeigegeräte können z.B. Geräte folgender Typklassen sein:

Ein Anzeigegerät zur Eventinformation ist z.B. in einem Kongressbereich direkt vor den Veranstaltungsräumen angebracht. Es gibt z.B. alle relevanten Informationen zur aktuellen Veranstaltung wieder, die im betreffenden Raum stattfindet: Raumbezeichnung, Messekontext, Logo, Titel, Datum und Uhrzeit der Veranstaltung, Untertitel, Referent sowie spezifische Informationen des Veranstalters (Detailprogramm). Seine Fußzeile bildet z.B. vorgegebene Angaben wie das Logo des Messegeländes, die Ortsangabe sowie die aktuelle Datums- und Uhrzeitangabe ab. Über diese Anzeigegeräte erhält der Besucher alle gewünschten Informationen über eine Veranstaltung direkt vor Ort.

Während z.B. die obere Raumbezeichnung und die Fußzeile dieses Anzeigtyps nicht frei zu bearbeiten sind, werden Angaben wie das Logo der Messe, Titel und Zeitangaben aus dem Eventkalender in der Datenbank gezogen. Die Detailinformationen verwaltet nach erteilter Freigabe der Veranstalter.

Anzeigegeräte in Form von Ebenenverteilern sind z.B. im Kongressbereich an Knotenpunkten wie Rolltreppen und Aufzügen angebracht und zeigen alle aktuellen Veranstaltungen im Bereich an. Die aufgeführten Veranstaltungen sind z.B. nach Messezugehörigkeit und in zweiter Priorität nach Veranstalter geordnet. Die Anzeige umfasst z.B. neben dem Veranstaltungstitel und -beginn den Veranstaltungsbereich mit Raumbezeichnung und Ebenenangabe sowie eine Anzeige, in welcher vertikalen oder horizontalen Richtung sich der Besucher bewegen muss, um dorthin zu gelangen. Alle Angaben werden vom Verfahren als Veranstaltungsinhalt oder Wegrichtung automatisch errechnet. Über den Ebenenverteiler erhalten Messebesucher so z.B. einen Navigationsdienst, der ihnen auf einen Blick die konkrete Richtung anzeigt, in der sie ihre gewünschte Veranstaltung finden.

Anzeigegeräte in Form von Großbild-Displays sind z.B. im Außenbereich angebracht und begrüßen den Besucher zu der Messe, die in den dahinterliegenden Räumlichkeiten stattfindet. So hat der Messegast auf seinem Weg vom Parkplatz oder der U-Bahn schon vor Betreten des Messegeländes einen Hinweis auf den richtigen Eingang zur Messe, die er besuchen möchte. Durch ihr Format können die Großbild-Displays gleichzeitig für Werbung genutzt werden. Die angezeigten Informationen (Name der Messe inkl. Logo, gegebenenfalls Untertitel sowie Zeitraum und Moodbild, also Stimmungsbild) werden z.B. aus dem Eventkalender generiert oder nach Möglichkeit gleich von der Messe-Website importiert.

Anzeigegeräte in Form von Hallenverteilern befinden sich an Knotenpunkten, z.B. zwischen einzelnen Hallen und zeigen alle zu einer Messe gehörigen Hallen an, z.B. mit Angabe des Themas und der Richtung, in der sie zu erreichen sind. Sind sie im Eingangsbereich einer Halle montiert, wird durch separate Anzeige (ein Anzeigegerät als Hallenübergangsanzeige) auf das Thema der direkt vor dem Besucher liegenden Halle aufmerksam gemacht.

Hallenverteiler und Hallenübergangsanzeige dienen z.B. dazu, Messegäste durch das Gelände zu der Halle zu navigieren, die sie besuchen möchten. Zusätzlich erhalten die Besucher einen gebündelten Überblick über alle Themen, welche die Hallen in Blickrichtung des Betrachters beherbergen. So können sie sich ein Gesamtbild der von ihnen besuchten Messe verschaffen.

Anzeigegeräte in Form von Touchterminals bieten z.B. Messebesuchern die Möglichkeit zu interaktiver Information über Messen und Veranstaltungen. Hierzu existiert ein Rückkanal für Benutzereingaben vom Touchterminal zum Steuerrechner. Relevante Angaben zu aktuellen Veranstaltungen sowie Informationen über Aussteller, Ausstellungsorte und Themenbereiche können durch gezielte Eingabe auch interaktiv abgerufen werden, indem im Verfahren Eingaben an Touchterminals berücksichtigt werden und z.B. die Orts- und Inhaltskriterien für dieses Anzeigegerät dementsprechend angepasst werden.

Darüber hinaus bieten die Touchterminals eine punktgenaue Navigation. Durch Eingabe von Messethema oder Veranstalter gleicht das Verfahren den Standort des Terminals mit dem gewünschten Zielort ab und erstellt dem Nutzer ein Schaubild, das ihn von seinem Standort aus zu seinem gewünschten Ziel leitet. Dieses Schaubild kann sich der Besucher z.B. ausdrucken und als Orientierung durch das Messegelände mitnehmen.

Besucher erhalten am Touchterminal jederzeit alle aktuellen Informationen über ihre Interessensgebiete, die über das übliche Wegeleitsystem weit hinausgehen. Die vom Touchterminal verarbeiteten Informationen generieren sich sowohl aus den dauerhaft in der Datenbank gespeicherten Daten als auch aus den messespezifischen Angaben aus dem Eventkalender (Datenbank) bzw. der Messe-Website.

Anzeigegeräte können auch mobile Geräte sein. Für die Übertragung von Information und Navigation auf mobile Geräte stellt das Verfahren insbesondere eine Verbindung zur mobilen Messe-Website her, die Messebesuchern ihre Fragen zeitnah und gebündelt beantwortet.

Anstatt eine eigene Software für mobile Geräte, kurz "App" genannt, zu entwickeln, die für den Besucher nur für einen begrenzten Zeitraum von Nutzen wäre und erst installiert werden müsste, nutzt das Verfahren Daten, die der Messebetreiber ohnehin zur Verfügung stellt und ergänzt diese durch ein komfortables Routenplanungssystem. Z.B. Über QR-Codes, die im Veranstaltungsbereich der jeweiligen Messe an zahlreichen auffälligen Orten angebracht sind, erreicht der Besucher die Messe-Website. Wenn er dort Informationen über Aussteller oder Interessensgebiete abfragt, erhält er das Angebot, sich anhand des Verfahrens eine Route zu seinem Ziel berechnen zu lassen. Wenn der Besucher dem zustimmt, wird er aufgefordert, über ein Popup-Fenster einen vierstelligen Zifferncode einzugeben. Über diesen erfolgt die für die Navigation erforderliche Ortung. Die vierstelligen Codes sind in unmittelbarer Nähe zu den QR-Codes angebracht, über welche die Messe-Website erreicht wurde. Da das Verfahren durch den Zifferncode, den es über die Messe-Website ebenso wie die Angabe des gesuchten Ziels erhält, den Standort der Abfrage bestimmt hat, ist es in der Lage, den günstigsten Weg zum gewünschten Zielort zu berechnen. Als Bild- oder Animationsanzeige für mobile Endgeräte stellt das Verfahren diesen über die Messe-Website dem Besucher als Anzeigeinhalt zur Verfügung.

In einer Variante dieser Ausführungsform werden als Typklassen: eine solche gewählt, die jeweilige, örtlich unmittelbar an einem einzigen Veranstaltungsbereich angeordnete Anzeigegeräte umfasst; und eine solche gewählt, die jeweilige, an Weggabelungen zu verschiedenen Veranstaltungsbereichen angeordnete Anzeigegeräte umfasst. Angesprochen sind damit insbesondere die o.g. Typlassen "Eventinformation" direkt vor den Veranstaltungsräumen, und die "Ebenenverteiler" bzw. "Hallenverteiler". Mit diesen beiden Typklassen können die Grundanforderungen jeder Beschilderung erfüllt werden, nämlich: Durch Geräte der ersten Typklasse wird Information kommuniziert, welches Ereignis am aktuellen Ort des Besuchers stattfindet. Durch Geräte der zweiten Typlasse wird kommuniziert, wie ein Besucher zu den verschiedenen Veranstaltungsbereichen gelangt.

In einer bevorzugten Ausführungsform des Verfahrens werden Datensätze durch verschiedene Benutzer eingegeben und/oder gelesen und/oder verändert, wobei die Benutzer anhand verschiedener Zugriffsrechte nur auf bestimmte Teile bestimmter Datensätze lesend und/oder schreibend zugreifen dürfen. Somit können verschiedene Benutzer, insbesondere von unterschiedlichen Orten aus, Informationen in Echtzeit in die Datenbank eingeben. Da die relevanten Anzeigegeräte daraufhin die relevanten geänderten Informationen augenblicklich anzeigen, können so die Benutzer die Informationen auch in Echtzeit zur Anzeige bringen.

Die unterschiedlichen Benutzer sind dabei insbesondere in Rollen eingeteilt, deren Bezeichnungen ihre Aufgabe im Rahmen der Organisation von Veranstaltungen wiedergeben: Disponent, Organisator, Organisationsassistent, Einzelveranstalter sowie weitere modulare Rollen. Jeder Benutzer erhält die für seine Rolle notwendigen Zugriffsrechte auf das Anzeigesystem bzw. die Datenbank, sodass er genau die Eingaben vornehmen kann, die seinem Tätigkeitsbereich entsprechen.

Im Folgenden wird eine beispielhafte Rollenverteilung für Benutzer erläutert: Die Informationen zu stattfindenden Veranstaltungen werden von den beteiligten Benutzern eingegeben und auf der Datenbank gespeichert. Jeder Benutzer hat dabei eine ihm zugeordnete Rolle mit den davon abhängigen Zugriffsrechten und Informationspflichten. Die Benutzerrollen können sich überschneiden, sind dabei allerdings genau auf den zu erwartenden Kenntnisstand der jeweiligen Rolle angepasst. So ist die Arbeit im Anzeigesystem für jeden Benutzer denkbar einfach und zielgerichtet.

Eine erste Benutzerrolle ist die eines "Disponenten". Der Disponent organisiert die Belegung des Messegeländes und ordnet die verfügbaren Areale den stattfindenden Messen zu. Dabei achtet er auf eine räumlich wie zeitlich überschneidungsfreie Belegung.

Im Anzeigesystem pflegt er dazu den im System hinterlegten Eventkalender. Er stimmt sich mit den Organisatoren über Belegungszeiten ab - gegliedert nach Aufbau, Laufzeit und Abbau - und weist den gebuchten Arealen Flächen und Gänge zu. Zusätzlich brieft der Disponent die jeweiligen Organisatoren über ihre Aufgaben bei der Bedienung des Anzeigesystems und erstellt ihre Zugänge, d.h. Zugriffsrechte für die ihnen zugeteilten Bereiche der Datenbank bzw. Datenbankeingaben, damit sie die Detailinformationen eingeben können.

Eine zweite Rolle ist die des "Organisators". Der Organisator nutzt die ihm zugewiesenen Areale und Zeiträume zur detaillierten Befüllung mit Events und Themen. Im Anzeigesystem stattet er den vom Disponenten durch die Zuweisung angelegten Eventkalender mit allen relevanten Daten zu seiner Messe aus. Darüber hinaus organisiert er die räumlichen und zeitlichen Anforderungen für vorgesehene Einzelveranstaltungen. Pro Raum und Zeitabschnitt ist nur ein Event gleichzeitig möglich.

Der Zeitraum im Eventkalender kann in Aufbau, Laufzeit und Abbau unterteilt werden. Die Zeitangaben für Auf- und Abbau sind für die Organisation wichtig, die Laufzeit ist der Zeitraum, der den Besuchern auf den Anzeigegeräten als Messezeitraum angegeben wird. Zu den Angaben über die Messe gehören Titel und Dauer, das Logo, Informationen zu den Ausstellern und weitere. Für detailliertere Informationen zur Messe kann der Organisator den von ihm belegten Hallen Themen zuordnen (z.B. bis zu zwei Themen pro Halle). Die Themen listet er in einer Thementabelle und kann diese somit einfach und flexibel den entsprechenden Hallen zuweisen. Auch Tickertexte lassen sich vom Organisator eingeben. Diese werden gemäß dem Verfahren an allen relevanten Displays angezeigt.

Sieht der Organisator für seine Messe Vorträge oder sonstige Events im Kongressbereich vor, brieft er die Einzelveranstalter über ihre Möglichkeiten im Anzeigesystem und erteilt ihnen die für sie notwendigen Freigaben, d.h. Zugriffsrechte auf die Datenbank. In einer Überblicksansicht des Systems erhält er einen Überblick, welcher Veranstalter einen Zugang erhalten hat und auch, ob dieser Zugang bereits genutzt wurde. Wenn er einzelne Tätigkeiten an einen Organisationsassistenten delegiert oder mit einem externen Organisator kooperiert, richtet er diesem die für sein Aufgabengebiet nötigen Freigaben ein.

Weitere Rollen sind z.B. ein "Organisationsassistent" oder ein "externer Organisator". Der Organisationsassistent bzw. ein externer Organisator nimmt die ihm vom Organisator übertragenen Aufgaben wahr. Seine Aufgaben decken sich mit denen des Organisators, sind jedoch auf bestimmte Arealbereiche oder Tage begrenzt.

Eine weitere Rolle ist die des "Einzelveranstalters". Der Einzelveranstalter pflegt die Details seiner Einzelveranstaltung. Er kann im System die Eventkopfdaten bearbeiten. Das heißt: ein Logo einstellen, den Titel und Untertitel seiner Veranstaltung eingeben, sowie den Freitext selbst erstellen. In der Regel werden diese Angaben schon vom Organisator im Eventkalender getätigt, der Einzelveranstalter kann diese aber im Bedarfsfall jederzeit korrigieren oder anpassen. Informationen, die über das Thema seiner Veranstaltung hinausgehen (wie z. B. das Detailprogramm), kann er nach erteilter Freigabe ohne Absprache mit dem Organisator selbst verwalten und gegebenenfalls modifizieren. Die Menge der Angaben zum Detailprogramm kann durchaus den Platz des Ausgabemediums in Form des betreffenden Anzeigegerätes überschreiten. In diesem Fall wird dort z.B. nach und nach jeweils der aktuelle Teil des Detailprogramms angezeigt. Über die Eingaben des Einzelveranstalters können Änderungen bezüglich einzelner Programmpunkte oder bezüglich Referenten augenblicklich auf das oder die passenden Displays übertragen werden. Eine wichtige Funktion ist hierzu auch die Eingabe von Tickertexten.

Ferner existiert die Rolle eines "Systemadministrators". Der Systemadministrator schafft die technischen Voraussetzungen für die Verwaltung der Arealbereiche durch den Disponenten. Ihm obliegen Einrichtung und etwaige Änderungen der Arealinformationen im Anzeigesystem. Außerdem verwaltet und kontrolliert der Systemadministrator z.B. die Darstellungsrechner, ordnet diese den Anzeigegeräten zu und wird über deren Betriebszustand informiert. Die Bildinhalte der Anzeigegeräte, d.h. die ggf. durch Layout formatierten Anzeigeinhalte, kontrolliert er per Vorschaufunktion im Anzeigesystem.

In einer weiteren bevorzugten Ausführungsform werden Datensätze über eine Internet-Schnittstelle eingegeben und/oder gelesen und/oder verändert. Mit anderen Worten erfolgt der Zugriff zur Dateneingabe, - veränderung oder -anzeige über ein sogenanntes Web-Interface (Schnittstelle mit Oberfläche für Benutzer-Ein- und -Ausgaben.) des Anzeigesystems. Die Eingaben der Benutzer erfolgen damit plattform- und ortsunabhängig. Sie werden im Eventkalender, also der Veranstaltungsliste gesammelt, der alle Informationen zu einer bestimmten Veranstaltung enthält, die für die Anzeige auf den betreffenden Anzeigegeräten verarbeitet werden können.

Folgende Ausgestaltungen sind möglich: Der Webserver stellt zur Dateneingabe und Systemverwaltung verschiedene Oberflächen bereit. Jeder Benutzerrolle wird ein spezifisches Interface zur Verfügung gestellt. So bleibt trotz der unterschiedlichen Aufgaben die Eingabeoberfläche übersichtlich. Die von den Benutzern eingegebenen Daten werden direkt nach Eingabe vom Webserver validiert. So werden beispielsweise die Zeichenanzahl eines Textes auf Überlauf kontrolliert oder die zeitliche Überschneidung zweier Events verhindert. Der Webserver filtert aus der Datenbank die für den jeweiligen Benutzer relevanten Informationen zur Anzeige. Auch eine Vorschau des Bildes, wie es später auf dem Anzeigegerät angezeigt wird, gibt dem Benutzer direktes Feedback bei der Eingabe. Der Webserver erstellt die Zugänge für die Personen, die das Anzeigesystem bedienen. Übergeordnete Benutzer können diese Zugänge verwalten.

In einer weiteren bevorzugten Ausführungsform des Verfahrens wird der Anzeigeinhalt in Schritt e) des Verfahrens in Form von Metadaten bereitgestellt. Diese beschreiben den darzustellenden Bildinhalt abstrakt, d.h. in Form von Anweisungen, wie welche Inhalte darzustellen sind. Erst später werden die Metadaten anhand einer Layoutvorlage in den konkreten graphischen Bildinhalt überführt. Erst der graphische Bildinhalt wird am Anzeigegerät angezeigt. Die Layoutvorlage bestimmt unter anderem Schriftgrößen oder -arten, Textplatzierung, Platzierung oder Größe von einzubindenden Grafiken oder Filmsequenzen, Animationen für Bildübergänge usw.

Die Metadaten sind z.B. textuell kodierte Daten bzw. kodierter Text, insbesondere Anweisungen an eine Grafik-Render-Engine, z.B. DirectX-oder HTML-Steuerbefehle, jedenfalls eine nicht-graphische Information, die lediglich beinhaltet, wie eine graphische Darstellung des Anzeigeinhalts zu erfolgen hat. Eine derartige Grafik-Render-Engine ist z.B. eine DirectX-3D-Render-Engine. Die Layoutvorlage beschreibt das Rahmenkonstrukt, gemäß welchem die Inhalte dann konkret an der Anzeige angeordnet und dargestellt werden. Erst anhand dieser Informationen wird also der am Anzeigegerät darzustellende Bildinhalt z.B. als Bildsignal erzeugt. Hierbei ist eine Aufteilung der Hardware möglich: Die Daten aus der Veranstaltungsliste werden zunächst vom Steuerserver verarbeitet, um die Anzeigeinhalte in Form von Metadaten bereitzustellen. Diese werden dann an Darstellungsrechner weitergeleitet, die aus diesen Informationen in Echtzeit Layouts generieren, die auf den Anzeigegeräten erscheinen.

Aus dem ermittelten Anzeigeinhalt wird z.B. für jedes Anzeigegerät eine eigene Transferdatei generiert, die die Metadaten enthält. Jede Datei enthält exakt die Informationen, die für genau ein Display relevant sind: den zugehörigen Text, zumindest die Bezeichnung des passenden Layouts sowie Informationen über zugehörige zusätzliche Bild- und Filmdateien. Die Transferdateien werden an die für das Anzeigegerät zuständigen Darstellungsrechner übertragen. Bei jeder Änderung in der Datenbank oder im Anzeigeinhalt werden die Transferdateien für die betreffenden Anzeigegeräte neu erstellt und übertragen.

Die Darstellungsrechner erfüllen insbesondere mittels zweier Komponenten die nötigen Arbeitsschritte. Der sogenannte "vConnector" empfängt die zu verarbeitenden Transferdateien vom Steuerserver. Die Textinhalte werden gruppiert, sortiert und nach Zeit gefiltert. Auch die in den Transferfiles definierten Zusatzdateien werden verwaltet. Dies sind sowohl die unterschiedlichen Layout-Templates, als auch beispielsweise Bild- und Filmdateien, die innerhalb einer Szene angezeigt werden sollen. Diese werden lokal auf den Darstellungsrechner kopiert. Sobald alle notwendigen Daten vorliegen und die Templates geladen sind, triggert der vConnector eine Render-Engine. Der vConnector übernimmt zusätzlich verschiedene Steuer- und Überwachungsaufgaben. So kann er den eigenen Darstellungsrechner beispielsweise neu starten und herunterfahren. Auch die Render-Engine wird mit verschiedenen Parametern überwacht und gesteuert, zum Beispiel dahingehend, dass je Anzeigegerät und Anwendungsfall die korrekte Szene geladen ist.

Die bildliche Darstellung der Information am Anzeigegerät erfolgt durch Berechnung von z.B. 60 Bildern / Sekunde direkt lokal im Darstellungsrechner für ein jeweiliges Display. Ein vorheriges Rendern des Anzeigeinhalts zu einer fertigen Bild- oder Filmdatei im Steuerserver - die dann lediglich auf dem Anzeigegerät wiedergegeben würde - erfolgt also nicht.

Die Grafik-Render-Engine übernimmt die Daten des vConnectors und errechnet daraus in Echtzeit das fertige Bildsignal (z.B. mit 60 Vollbildern pro Sekunde). Sie passt die Informationen, die sie vom vConnector erhält, an das Display an und füllt verfügbare Flächen des Anzeigebildschirms optimal aus. Je Anwendungsfall und Displayformat gibt es eigene Templates. Zusätzlich können Messekunden ihr eigenes Template je Displaytyp für ihre Veranstaltung programmieren lassen. Jedes Template hat eine eigene Darstellungslogik und eine Animationslogik. Die Darstellungslogik blendet beispielsweise nicht gefüllte Textfelder aus. Das heißt: Wenn eine Überschrift beispielsweise nur einzeilig ist, verschwindet die zweite Zeile, und die dargestellte erste Zeile wird mittig positioniert. Wenn nur wenige Zeichen dargestellt werden, wird automatisch die Schriftgröße angepasst.

Neue Informationen verarbeitet die Render-Engine für das Medium, das sie bedient, zu Animationen. Jede neue Information wird von der Render-Engine überprüft. Bei bestimmten Kriterien (beispielsweise geänderte Texte) wird eine vorher definierte Animation gestartet. So werden Veränderungen auf den Displays nicht als Bruch, sondern als ästhetische Übergänge dargestellt und die Aufmerksamkeit des Betrachters gesteigert.

Dank dieser Vorgehensweise kann der Benutzer das Anzeigesystem mit (abstrakten) Informationen befüllen, ohne sich um die Formatierung der bildlichen Darstellung auf den Anzeigegeräten kümmern zu müssen. Etwaige Zeichenbegrenzungen sind bei der Überprüfung von Benutzereingaben bereits voreingestellt. Eine Überfüllung des Ausgabemediums ist somit ausgeschlossen. Zur Kontrolle wird im Vorschaumodus schon bei der Eingabe das fertige Layout, z.B. im Web-Interface, wiedergegeben, das sich aus den neu erfassten Informationen ergibt bzw. ergeben wird.

In einer weiteren bevorzugten Ausführungsform werden mehrere in Schritt e) bereitgestellte Anzeigeinhalte gespeichert. Anhand eines Zeitkriteriums und der aktuellen Uhrzeit wird mindestens einer der Anzeigeinhalte zur aktuellen Anzeige am Anzeigegerät ausgewählt. Dies ermöglicht insbesondere, bereits vorbereitete Anzeigeinhalte fern vom ermittelnden Steuerserver dezentral bei einem betreffendem Anzeigegerät, z.B. in einem lokalen Darstellungsrechner, zu speichern, um den Inhalt dann zu gegebener Zeit später dort anzuzeigen. Zum eigentlichen Wechsel der Anzeige muss dann der Steuerserver selbst nicht mehr aktiv werden. Dies bietet den Vorteil, dass Anzeigen auch dann nach einem Zeitplan vom lokalen Darstellungsrechner geändert werden können, wenn die Netzwerkverbindung zum Steuerserver gerade ausgefallen ist. Es werden daher in Zukunft (z.B. 24 Stunden oder eine Woche) darzustellende Anzeigeinhalte sicherheitshalber zentral im Steuerserver vorab ermittelt und im Darstellungsrechner dezentral zwischengespeichert.

Für das Verfahren können optional verschiedene Zusatzeigenschaften bereitgestellt werden.

Das Verfahren ist prinzipiell endlos skalierbar. Das bedeutet, dass beliebig viele Anzeigegeräte an das System angeschlossen werden können. Aber auch die Art der anzuzeigenden Medien sowie die Anzahl und Art der Benutzerrollen sind nicht eingeschränkt. Ebenso stehen zusätzliche Funktionen zur Verfügung, die für die Organisation von Informationen nicht gänzlich unerlässlich sind, diese jedoch weiter erleichtern.

Ein Demonstrationsmodus erlaubt die Anzeige von Informationen in definierten Arealbereichen, deren Anzeige für einen späteren Zeitpunkt bestimmt ist bzw. zu einem bereits vergangenen Zeitpunkt erfolgt ist. So kann sich ein Veranstalter beispielsweise am Vorabend der Veranstaltung die Hallen und Räume so ansehen, wie die Besucher am Folgetag die Räumlichkeiten erleben.

Ein Vorschauserver, insbesondere für das Web-Interface, verarbeitet während der Eingabe eines Benutzers die eingegebenen Daten augenblicklich zu einem Vorschaubild. Dieses wird - z.B. im Web-Interface - angezeigt, indem es das entsprechende Anzeigegerät simuliert. Der Benutzer erhält dadurch die Möglichkeit, seine eingegebenen Daten direkt zu prüfen.

Eine Backup-Steuerung für Darstellungsrechner kann vorgesehen werden. Üblicherweise werden die Darstellungsrechner in einem Serverschrank durch einen Steuerrechner ergänzt, der ihre Leistung überwacht. Bei Ausfällen ermittelt er die Ursache, um den Fehler automatisiert zu beheben. Die Darstellungsrechner sind in der Backup-Konfiguration nicht direkt, sondern über eine Bildmatrix mit den Displays verbunden. Kann ein Fehler auf einem Darstellungsrechner nicht behoben werden, springt ein Backup-Darstellungsrechner ein. Hierzu gibt der Steuerrechner die notwendigen Impulse, dass sowohl der Backup-Server die ausgefallenen Funktionen übernimmt als auch die Bildmatrix die betroffenen Displays vom fehlerhaften Server hin zum Backup-Server schaltet.

Die Möglichkeit von Tickertexten und Werbemanagement kann vorgesehen werden. Alle Anzeigegeräte, die vom Verfahren bedient werden, können für Werbezwecke genutzt werden. Entweder, wenn auf ihnen bei der Nutzung genügend Platz verfügbar ist, Information und Werbung darzustellen, ohne den informativen Charakter zu stören, oder wenn ein Display nicht genutzt wird. Das Verfahren zeigt z.B. einem Benutzer nutzbare Werbeflächen mit Angabe der verfügbaren Größe und des möglichen Zeitraums an. Zur Abrechnung von tatsächlich gezeigten Werbeeinblendungen erstellt das Verfahren eine Auswertung über die Einblendungsdauer auf den verschiedenen Displays. So bietet das Verfahren ein effizientes Instrument zum Werbemanagement.

Für Hinweise, Veranstaltungsankündigungen und weitere Zwecke können Tickertexte genutzt werden. Die Eingabe erfolgt über durch die jeweiligen verantwortlichen Personen. Die Ansteuerung der Anzeigegeräte, die den jeweiligen Tickertext abbilden sollen, erfolgt bei themenbezogenen Texten automatisch oder lässt sich manuell bestimmen.

Optional kann die Möglichkeit zum Daten-Streaming vorgesehen werden. Das Verfahren bietet dann die Möglichkeit der Einspeisung und Übertragung von mehreren Livebildern auf dem gesamten Areal. Dazu werden Streamingserver eingesetzt. Diese haben verschiedene Live-Bild Eingänge und werden dezentral an das Anzeigesystem angeschlossen. Über Eingaben wird von einem Benutzer festgelegt, in welche Bereiche am Gelände das Live-Bild übertragen werden soll. Auf den zuständigen Darstellungsrechnern wird das jeweils notwendige Template geladen und auf den ausgewählten Displays der Stream als Fenster oder als Vollbild dargestellt. Dadurch können beispielsweise Events in mehrere Räume übertragen oder feierliche Eröffnungsreden von Messen auf Großbild-Displays wiedergegeben werden.

Generell können auf Displays neben und unabhängig von den vom Verfahren ermittelten Informationen auch zusätzliche Bildinhalte dargestellt werden, z.B. eine aktuelle Uhrzeit und Datum, eine Raumbezeichnung für einen Raum, neben dem ein Display angebracht ist, eine Logo des Veranstaltungsgeländes usw.

Vom Verfahren kann ein Infocounter bedient werden. So können Informations- und Registrierungscountern mit Hilfe des Verfahrens mittels darüber angebrachter Displays spezifische Funktionen zugeordnet werden. Die Anzeigen werden als Ausschilderung beispielsweise zu Themen (Betreuung zu bestimmten Messen) oder Zielgruppen (VIP-Counter, spezielle Fremdsprachenkenntnisse) verwendet. Beispielsweise mit einem mobilen Eingabegerät kann der Mitarbeiter oder eine Aufsichtsperson als Benutzer über das Web-Interface die Inhalte der Counteranzeige selbst steuern. Für die notwendigen Eingaben werden die Benutzer dazu autorisiert.

Möglichkeiten zur Eventausstattung können geboten werden: Zusätzlich zu den direkt veranstaltungsbezogenen Anzeigeinformationen können im Verfahren weitere Informationen hinterlegt werden, die für den Ablauf eines Events relevant sind. Der Einzelveranstalter kann beispielsweise Wünsche zur Ausstattung des Raumes oder Anfragen für Dienstleistungen wie Catering oder Medientechnik eintragen. Die zugeordneten Dienstleister bekommen entweder einen Report über sie betreffende angefragte Leistungen oder einen Zugang zum Anzeigesystem, sodass sie über dieses als Kommunikationsplattform direkt mit dem Einzelveranstalter kommunizieren können.

Das gesamte Verfahren zusammen mit seinem Ausführungsformen minimiert für die Benutzer erstmalig den Bedarf an Kontrolle und Bearbeitung der Informationswiedergabe, weil es das Optimum an Übersichtlichkeit und Ästhetik für die angezeigten Bildinhalte errechnet. Über die Vorschaufunktion kann schon bei der Eingabe die fertige Displayanzeige betrachtet werden.

Hinsichtlich des Anzeigesystems wird die Aufgabe gelöst durch ein Anzeigesystem mit einer Mehrzahl von Anzeigegeräten, die über ein Veranstaltungsgelände mit verschiedenen Veranstaltungsbereichen verteilt an jeweiligen Anzeigeorten platzierbar sind, wobei das Veranstaltungsgelände für das Stattfinden verschiedener Veranstaltungen dient. Die Veranstaltungsbereiche befinden sich an entsprechenden Veranstaltungsorten. Das Anzeigesystem enthält eine Datenbank, die wiederum enthält: einen Geländeplan, in dem die Ortsdaten aller Veranstaltungsorte gespeichert sind, einen Anzeigenplan, in dem die Ortsdaten aller Anzeigeorte gespeichert sind, eine Veranstaltungsliste, in der für jede Veranstaltung deren Veranstaltungsbereich, Veranstaltungszeit und Veranstaltungsinhalt in einem Datensatz gespeichert sind. Das Anzeigesystem enthält außerdem einen Steuerserver, der dazu ausgebildet ist, um automatisch wenigstens bei jeder Veränderung in einem der Datensätze für jedes der Anzeigegeräte folgende Schritte auszuführen: Anhand mindestens eines Ortskriteriums ermittelt er durch Auswertung des Veranstaltungsorts und des Anzeigeorts, ob zumindest ein Teil der veränderten Informationen des Datensatzes auf dem bestimmten Anzeigegerät anzuzeigen ist. Anhand mindestens eines Inhaltskriteriums ermittelt er einen Anzeigeinhalt für das bestimmte Anzeigegerät aus dem Datensatz. Er stellt den ermittelten Anzeigeinhalt zur Anzeige am Anzeigegerät bereit.

Das Anzeigesystem eignet sich insbesondere zur Durchführung des oben erläuterten Verfahrens. Das Anzeigesystem wurde sinngemäß im Zusammenhang mit dem erfindungsgemäßen Verfahren erläutert und weist entsprechend dessen Vorteile auf.

In einer bevorzugten Ausführungsform ist der Steuerserver dazu ausgebildet, anhand des Inhaltkriteriums eine die Wegrichtung vom Anzeigeort zum Veranstaltungsbereich anzeigende Information als Anzeigeinhalt für das Anzeigegerät zu ermitteln, und die Wegrichtung anhand eines Routing-Algorithmus aus dem Geländeplan und dem Anzeigenplan zu ermitteln. Mit anderen Worten ist also im Steuerserver ein Routing-Modul enthalten, so dass dieser eine Wegrichtung nach Art eines üblichen Navigationssystems automatisch ermitteln kann.

In einer weiteren Ausführungsform sind alle Anzeigegeräte jeweils einer von mindestens zwei Typklassen zugeordnet und mindestens ein Ortskriterium und/oder Inhaltskriterium ist für alle Anzeigegeräte einer bestimmten Typklasse gleich gewählt. Durch die Aufteilung in Typklassen können die Anzeigegeräte einer Klasse gemeinsam verwaltet werden. Z.B. Änderungen im Systemdesign müssen so nur einmal entwickelt werden und können dann für alle Geräte der Typklasse verwendet werden.

In einer bevorzugten Variante sind als Typklassen eine solche gewählt, die jeweilige, örtlich unmittelbar an einem einzigen Veranstaltungsbereich angeordnete Anzeigegeräte umfasst, und eine solche gewählt, die jeweilige, an Weggabelungen zu verschiedenen Veranstaltungsbereichen angeordnete Anzeigegeräte umfasst. Im ersten Fall ist also jedem der Geräte genau ein einziger Veranstaltungsbereich zugeordnet. Die dort angezeigten Informationen betreffen also nur diesen Veranstaltungsbereich. An einem anderen Veranstaltungsbereich sind dann andere Anzeigegeräte dieser Klasse angeordnet. Die dort angezeigten Informationen betreffen dann nur den anderen Veranstaltungsbereich. Im zweiten Fall dienen die Anzeigegeräte als Wegweiser, um Besucher die Wegwahl an Weggabelungen zu erleichtern.

In einer bevorzugten Ausführungsform weist das Anzeigesystem eine Internet-Schnittstelle zum Eingegeben und/oder Lesen und/oder Verändern der Datensätze auf. So kann ein Internet- also Web-Interface zur Datenein- und Ausgabe für das Anzeigesystem realisiert werden.

In einer weiteren Ausführungsform weist das Anzeigesystem einen Steuerserver auf, der ausgebildet ist, um den Anzeigeinhalt in Form von einen Bildinhalt abstrakt beschreibenden Metadaten bereitzustellen. Das Anzeigesystem enthält außerdem einen Darstellungsrechner, der ausgebildet ist, die Metadaten anhand einer Layoutvorlage in den konkreten graphischen Bildinhalt zu überführen. Mit anderen Worten ist damit der Steuerserver ein zentraler Rechner, der Darstellungsrechner ein Client, der einem oder mehreren Anzeigegeräten zugeordnet ist. Insbesondere ist der Darstellungsrechner lokal im Bereich des Anzeigegerätes platziert.

In einer Variante dieser Ausführungsform ist der Darstellungsrechner ausgebildet, mehrere, vom Steuerserver ermittelte Anzeigeinhalte zu speichern, und anhand eines Zeitkriteriums und der aktuellen Zeit einen der Anzeigeinhalte zur aktuellen Anzeige am Anzeigegerät auszuwählen.

Die bevorzugten Ausführungsformen des Anzeigesystems wurden zusammen mit ihren Vorteilen ebenfalls sinngemäß im Zusammenhang mit dem erfindungsgemäßen Verfahren erläutert.

Die Erfindung betrifft auch die Verwendung eines Routing-Algorithmus in den jeweiligen Ausführungsformen des oben erläuterten Verfahrens.

Insbesondere wird erfindungsgemäß ein Routing-Algorithmus verwendet in einem Verfahren zum Betreiben einer Mehrzahl von Anzeigegeräten eines Anzeigesystems, die über ein Veranstaltungsgelände mit verschiedenen Veranstaltungsbereichen verteilt an jeweiligen Anzeigeorten platziert sind, wobei im Veranstaltungsgelände verschiedene Veranstaltungen stattfinden, bei dem: die Ortsdaten aller Veranstaltungsorte in einem Geländeplan gespeichert werden, die Ortsdaten aller Anzeigeorte in einem Anzeigenplan gespeichert werden, für jede Veranstaltung deren Veranstaltungsbereich, Veranstaltungszeit und Veranstaltungsinhalt in einem Datensatz einer Veranstaltungsliste gespeichert werden, wenigstens bei jeder Veränderung in einem der Datensätze automatisch für jedes der Anzeigegeräte folgende Schritte ausgeführt werden: Anhand mindestens eines Ortskriteriums wird durch Auswertung des Veranstaltungsorts und des Anzeigeorts ermittelt, ob zumindest ein Teil der veränderten Informationen des Datensatzes auf dem bestimmten Anzeigegerät anzuzeigen ist, anhand mindestens eines Inhaltskriteriums wird eine die Wegrichtung vom Anzeigeort zum Veranstaltungsort bzw. -bereich anzeigende Information als Anzeigeinhalt für das bestimmte Anzeigegerät aus dem Datensatz ermittelt, und die Wegrichtung vom Anzeigeort zum Veranstaltungsort anhand eines Routing-Algorithmus aus dem Geländeplan und dem Anzeigenplan ermittelt. Der ermittelte Anzeigeinhalt wird zur Anzeige am Anzeigegerät bereitgestellt.

Die Erfindung betrifft auch die Verwendung einer Grafik-Render-Engine in den jeweiligen Ausführungsformen des oben erläuterten Anzeigesystems.

Insbesondere wird erfindungsgemäß eine Grafik-Render-Engine verwendet in einem Anzeigesystem mit einer Mehrzahl von Anzeigegeräten, die über ein Veranstaltungsgelände mit verschiedenen Veranstaltungsbereichen verteilt an jeweiligen Anzeigeorten platzierbar sind, wobei das Veranstaltungsgelände für das Stattfinden verschiedener Veranstaltungen dient, mit einer Datenbank, enthaltend: einen Geländeplan, in dem die Ortsdaten aller Veranstaltungsorte gespeichert sind, einen Anzeigenplan, in dem die Ortsdaten aller Anzeigeorte gespeichert sind, eine Veranstaltungsliste, in der für jede Veranstaltung deren Veranstaltungsbereich, Veranstaltungszeit und Veranstaltungsinhalt in einem Datensatz gespeichert sind, und mit einem Steuerserver, der dazu ausgebildet ist, um automatisch wenigstens bei jeder Veränderung in einem der Datensätze für jedes der Anzeigegeräte folgende Schritte auszuführen: Anhand mindestens eines Ortskriteriums ermittelt er durch Auswertung des Veranstaltungsbereichs und des Anzeigeorts, ob zumindest ein Teil der veränderten Informationen des Datensatzes auf dem bestimmten Anzeigegerät anzuzeigen ist. Anhand mindestens eines Inhaltskriteriums ermittelt er einen Anzeigeinhalt für das bestimmte Anzeigegerät aus dem Datensatz. Den ermittelten Anzeigeinhalt stellt er zur Anzeige am Anzeigegerät in Form von einen Bildinhalt abstrakt beschreibenden Metadaten. Das Anzeigesystem enthält einen Darstellungsrechner, der ausgebildet ist, die Metadaten anhand einer Layoutvorlage mit Hilfe einer Grafik-Render-Engine in den konkreten graphischen Bildinhalt zu überführen.

Für eine weitere Beschreibung der Erfindung wird auf die Ausführungsbeispiele der Zeichnung verwiesen. Es zeigt, jeweils in einer schematischen Prinzipskizze:
Fig. 1 ein Veranstaltungsgelände mit Anzeigegeräten eines Anzeigesystems,
Fig. 2 ein Anzeigesystem,
Fig. 3 die Datenbank des Anzeigesystems,
Fig. 4 den Steuerserver des Anzeigesystems,
Fig. 5 den Darstellungsrechner des Anzeigesystems.

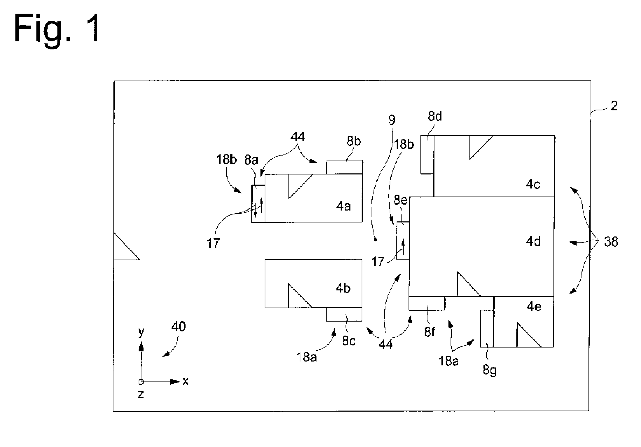

Figur 1 zeigt als Veranstaltungsgelände 2 ein Messezentrum, welches verschiedene Veranstaltungsbereiche 4a-e in Form von Messehallen aufweist. Am Veranstaltungsgelände 2 ist ein Anzeigesystem 6 installiert, von dem in Figur 1 mehrere Anzeigegeräte 8a-g installiert sind. Die Veranstaltungsbereiche 4a-e befinden sich an Veranstaltungsorten 38, die Anzeigegeräte 8a-g an Anzeigeorten 44. An einer Weggabelung 9 teilt sich ein Weg auf zu verschiedenen Veranstaltungsbereichen 4c-e.

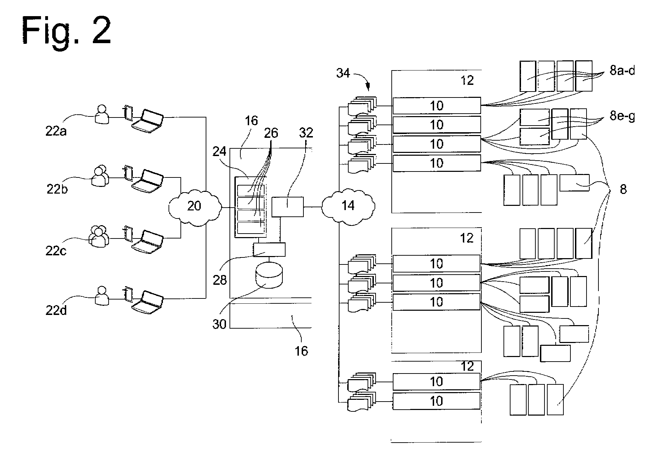

Figur 2 zeigt das Anzeigesystem 6 in seiner Gesamtheit mit insgesamt 400 Anzeigegeräten 8, von denen nur ein Teil dargestellt ist. Je vier Anzeigegeräte 8 sind an einem gemeinsamen Darstellungsrechner 10 angeschlossen, von dem daher insgesamt 100 Stück vorgesehen sind (nur teils dargestellt). Die Darstellungsrechner 10 sind jeweils in Gruppen zu Rechnerracks 12 zusammengefasst. Über ein erstes Netzwerk 14, beispielsweise ein Intranet oder das Internet, sind die Darstellungsrechner 10 an einem Steuerserver 16 angeschlossen, dem ein redundanter Backup-Steuerserver 16' zugeordnet ist. Über ein zweites Netzwerk 20, beispielsweise wieder das Internet, ist es verschiedenen Benutzern 22a-d möglich, auf den Steuerserver 16 zuzugreifen.

Der Steuerserver 16 enthält einen Webserver 24, der zur Kommunikation mit den Benutzern 22a-d verschiedene Oberflächen 26 bereitstellt, im Beispiel eine Admin-Oberfläche, eine Dispo-Oberfläche, eine Organisations-Oberfläche und eine Aussteller-Oberfläche. Der Steuerserver 16 enthält außerdem eine zentrale Prozesslogik 28, eine Datenbank 30 sowie eine Ausgabeeinheit 32 zur Generierung von Transferdateien 34. Die Transferdateien 34 dienen zur Kommunikation des Steuerservers 16 mit den Darstellungsrechnern 10.

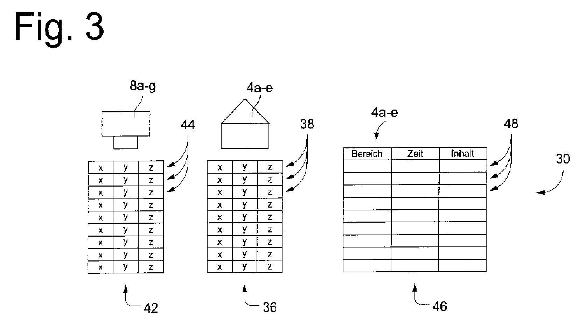

Fig. 3 zeigt den Inhalt der Datenbank 30: In einem Geländeplan 36 in Form einer Tabelle, sind jeweils die Ortsdaten (z.B. x-, y-, z-Koordinaten) aller Veranstaltungsorte 38 gespeichert. Die Veranstaltungsorte 38 geben daher die Orte sämtlicher Veranstaltungsbereiche 4a-e in einem Koordinatensystem 40 des Veranstaltungsgeländes 2 wieder. Die Datenbank enthält außerdem einen Anzeigenplan 42, in welchem die Ortsdaten (z.B. x-, y-, z-Koordinaten) sämtlicher Anzeigeorte 44 für jedes der Anzeigegeräte 8a-g gespeichert sind. Somit sind auch die Orte sämtlicher Anzeigegeräte 8a-g im Koordinatensystem 40 gekannt. Die Datenbank 30 enthält außerdem eine Veranstaltungsliste 46 in der zu jeder Veranstaltung ein Datensatz 48 vorgesehen ist. Jeder der Datensätze 48 enthält jeweils den Veranstaltungsbereich 4a-e, die Veranstaltungszeit (z.B. Datum, Uhrzeit, Dauer) und den Veranstaltungsinhalt (Angaben zum Inhalt, Referenten, Themen usw.) jeder Veranstaltung, welche im Veranstaltungsgelände 2 durchgeführt wird.

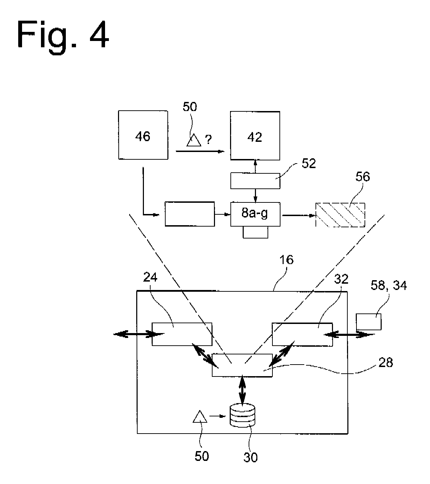

Fig. 4 verdeutlicht die Arbeitsweise der Prozesslogik 28 im Steuerserver 16. Wenigstens bei jeder Veränderung 50 in einem der Datensätze 48 werden automatisch für jedes der Anzeigegeräte 8a-g aus dem Anzeigenplan 42 folgende Schritte durchgeführt: Anhand eines Ortskriteriums 52 wird durch Auswertung des Veranstaltungsortes 38 aus dem betreffenden Datensatz 48 der Veranstaltungsliste 46 (Zuordnung mit Hilfe des Geländeplans 36) und des Anzeigeorts 44 aus dem Anzeigenplan 42 ermittelt, ob zumindest ein Teil der veränderten Informationen des Datensatzes 48 auf dem bestimmten Anzeigegerät 8a-g anzuzeigen ist. Außerdem wird anhand eines Inhaltskriteriums 54 aus dem Datensatz 48 in der Veranstaltungsliste 46 ein Anzeigeinhalt 56 für das bestimmte Anzeigegerät 8a-g ermittelt. Der ermittelte Anzeigeinhalt 56 wird über die Ausgabeeinheit 32 zur Anzeige an einem der Anzeigegeräte 8a-g bereitgestellt.

Der Anzeigeinhalt kann hierbei ein Teil der Information aus dem betreffenden Veranstaltungsinhalt sein, auch eine Orts oder Zeitangabe zur Veranstaltung des betreffenden Datensatzes 46. Der Anzeigeinhalt kann aber auch eine Information sein, die eine Wegrichtung 17 angibt, die von einem Anzeigegerät 8a-g zu einem Veranstaltungsbereich 4a-e weist. In Fig. 1 ist beispielhaft eine Wegrichtung 17 als Pfeil vom Anzeigegerät 8e zum Veranstaltungsbereich 4c dargestellt. Der Anzeigeinhalt 56 wird in Form von Metadaten 58 in der Transferdatei 34 übertragen.

Fig. 1 zeigt zwei Typklassen 18a,b von Anzeigegeräten 8a-g. Die Anzeigegeräte 8b,c,d,f,g gehöre zur Typklasse 18a "Eventinformation". Sie sind alleine und jeweilig einzeln den Veranstaltungsbereichen 4a,b,c,d,e zugeordnet. Sie zeigen als Anzeigeinhalt 56 jeweilige detaillierte Informationen an, die jeweilig alleine die Veranstaltungen in den Veranstaltungsbereichen 4a,b,c,d,e betreffen. Die Anzeigegeräte 8a,e dagegen gehören der Typklasse 18b "Ebenenverteiler" an. Diese weisen Wege zu verschiedenen Veranstaltungsbereichen 4a-e und geben nur Überblicksinformationen über die dort stattfindenden Veranstaltungen wieder. Dabei enthalten sie jedoch Informationen über Wegrichtungen 17 zu den Veranstaltungsbereichen 4a-e.

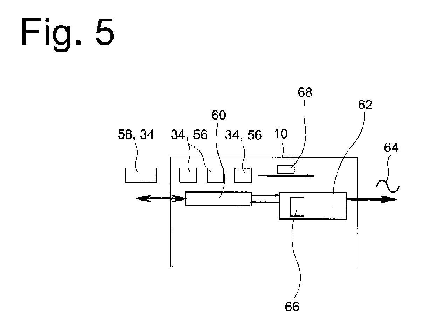

Figur 5 zeigt einen Darstellungsrechner 10 im Detail, welcher die Metadaten 58 in Form der Transferdateien 34 empfängt. Der Darstellungsrechner 10 enthält einen V-Connector 60 und eine DirectX-Render-Engine als Grafik-Render-Engine 62. Der V-Connector 60 übersetzt hierbei die Metadaten 58 in Kommandoanweisungen an die Grafik-Render-Engine 62, welche an ihrem Ausgang einen konkreten grafischen Bildinhalt 64 in Form eines Bildsignals erzeugt. Hierzu verwendet die Grafik-Render-Engine 62 eine LayoutVorlage 66.

Im Darstellungsrechner 10 sind außerdem mehrere Anzeigeinhalte 56 in Form von Transferdateien 34 gespeichert, die Informationen betreffen, die zu verschiedenen Zeitpunkten an Anzeigegeräten 8a-g anzuzeigen sind. Anhand eines Zeitkriteriums 68 und der aktuellen Zeit wird entschieden, welcher der gespeicherten Anzeigeinhalte 56 zur aktuellen Zeit bzw. wann tatsächlich anzuzeigen ist.

### Bezugszeichenliste

- 2: Veranstaltungsgelände
- 4a-e: Veranstaltungsbereich
- 6: Anzeigesystem
- 8a-g: Anzeigegerät
- 9: Weggabelung
- 10: Darstellungsrechner
- 12: Rechner-Rack
- 14: Netzwerk
- 16: Steuerserver
- 17: Wegrichtung
- 18a,b: Typklasse
- 20: Netzwerk
- 22a-d: Benutzer
- 24: Webserver
- 26: Oberfläche
- 28: Prozesslogik
- 30: Datenbank
- 32: Ausgabeeinheit
- 34: Transferdatei
- 36: Geländeplan
- 38: Veranstaltungsort
- 40: Koordinatensystem
- 42: Anzeigenplan
- 44: Anzeigeort
- 46: Veranstaltungsliste
- 48: Datensatz
- 50: Veränderung
- 52: Ortskriterium
- 54: Inhaltskriterium
- 56: Anzeigeinhalt
- 58: Metadaten
- 60: vConnector
- 62: Grafik-Render-Engine
- 64: Bildinhalt
- 66: Layoutvorlage
- 68: Zeitkriterium

## Patentansprüche

1. Verfahren zum Betreiben einer Mehrzahl von an jeweiligen Anzeigeorten (44) platzierten Anzeigegeräten (8a-g) eines Anzeigesystems (6), die über ein Veranstaltungsgelände (2) mit verschiedenen Veranstaltungsbereichen (4a-e) an Veranstaltungsorten (38) verteilt sind, wobei im Veranstaltungsgelände (2) verschiedene Veranstaltungen stattfinden, bei dem:
a) die Ortsdaten aller Veranstaltungsorte (38) in einem Geländeplan (36) gespeichert werden,
b) die Ortsdaten aller Anzeigeorte (44) in einem Anzeigenplan (42) gespeichert werden,
c) für jede Veranstaltung deren Veranstaltungsbereich (4a-e), Veranstaltungszeit und Veranstaltungsinhalt in einem Datensatz (48) einer Veranstaltungsliste (46) gespeichert werden,
d) wenigstens bei jeder Veränderung (50) in einem der Datensätze (48) automatisch für jedes der Anzeigegeräte (8a-g) folgende Schritte ausgeführt werden:
d1) anhand mindestens eines Ortskriteriums (52) wird durch Auswertung des Veranstaltungsorts (38) und des Anzeigeorts (44) ermittelt, ob zumindest ein Teil der Informationen des Datensatzes (48) auf dem bestimmten Anzeigegerät (8a-g) anzuzeigen ist,
d2) anhand mindestens eines Inhaltskriteriums (54) wird ein Anzeigeinhalt (56) für das bestimmte Anzeigegerät (8a-g) aus dem Datensatz (48) ermittelt,
e) der ermittelte Anzeigeinhalt (56) zur Anzeige am Anzeigegerät (8a-g) bereitgestellt wird.

2. Verfahren nach Anspruch 1, bei dem anhand des Inhaltkriteriums (54) zumindest ein Teil des Veranstaltungsinhalts als Anzeigeinhalt (56) ermittelt wird.

3. Verfahren nach einem der vorhergehenden Ansprüche, bei dem anhand des Inhaltkriteriums (54) eine die Wegrichtung (17) vom Anzeigeort (44) zum Veranstaltungsort (38) anzeigende Information als Anzeigeinhalt (54) für das Anzeigegerät (8a-g) ermittelt wird.

4. Verfahren nach Anspruch 3, bei dem die Wegrichtung (17) vom Anzeigeort (44) zum Veranstaltungsort (38) anhand eines Routing-Algorithmus aus dem Geländeplan (36) und dem Anzeigenplan (42) ermittelt wird.

5. Verfahren nach einem der vorhergehenden Ansprüche, bei dem alle Anzeigegeräte (8a-g) jeweils einer von mindestens zwei Typklassen (18a,b) zugeordnet werden und mindestens ein Ortskriterium (52) und/oder Inhaltskriterium (54) für alle Anzeigegeräte (8a-g) einer bestimmten Typklasse 18a,b) gleich gewählt wird.

6. Verfahren nach Anspruch 5, bei dem als Typklassen (18a,b)
- eine solche (a) gewählt wird, die jeweilige, örtlich unmittelbar an einem einzigen Veranstaltungsbereich (4a-e) angeordnete Anzeigegeräte (8a-g) umfasst, und
- eine solche (b) gewählt wird, die jeweilige, an Weggabelungen (9) zu verschiedenen Veranstaltungsbereichen (4a-e) angeordnete Anzeigegeräte (8ag) umfasst.

7. Verfahren nach einem der vorhergehenden Ansprüche, bei dem
- der Anzeigeinhalt (56) in Schritt e) in Form von einen Bildinhalt (64) abstrakt beschreibenden Metadaten (58) bereitgestellt wird,
- die Metadaten (58) anhand einer Layoutvorlage (66) in den konkreten graphischen Bildinhalt (64) überführt werden,
- der graphische Bildinhalt (64) am Anzeigegerät (8a-g) angezeigt wird.

8. Verfahren nach einem der vorhergehenden Ansprüche, bei dem
- mehrere in Schritt e) bereitgestellte Anzeigeinhalte (64) gespeichert werden, und
- anhand eines Zeitkriteriums (68) und der aktuellen Uhrzeit mindestens einer der Anzeigeinhalte (64) zur aktuellen Anzeige am Anzeigegerät (8a-g) ausgewählt wird.

9. Anzeigesystem (6) mit einer Mehrzahl von an jeweiligen Anzeigeorten (44) platzierbaren Anzeigegeräten (8a-g), die über ein Veranstaltungsgelände (2) mit verschiedenen Veranstaltungsbereichen (4a-e) an Veranstaltungsorten (38) verteilt sind, wobei das Veranstaltungsgelände (2) für das Stattfinden verschiedener Veranstaltungen dient,
a) mit einer Datenbank (30), enthaltend:
i) einen Geländeplan (36), in dem die Ortsdaten aller Veranstaltungsorte (38) gespeichert sind,
ii) einen Anzeigenplan (42), in dem die Ortsdaten aller Anzeigeorte (44) gespeichert sind,
iii) eine Veranstaltungsliste (46), in der für jede Veranstaltung deren Veranstaltungsbereich (4a-e), Veranstaltungszeit und Veranstaltungsinhalt in einem Datensatz (48) gespeichert sind,
b) und mit einem Steuerserver (16), der dazu ausgebildet ist, um automatisch wenigstens bei jeder Veränderung (50) in einem der Datensätze (48) für jedes der Anzeigegeräte (8a-g):
b1) anhand mindestens eines Ortskriteriums (52) durch Auswertung des Veranstaltungsorts (38) und des Anzeigeorts (44) zu ermitteln, ob zumindest ein Teil der veränderten Informationen des Datensatzes (48) auf dem bestimmten Anzeigegerät (8a-g) anzuzeigen ist,
b2) anhand mindestens eines Inhaltskriteriums (54) einen Anzeigeinhalt (56) für das bestimmte Anzeigegerät (8a-g) aus dem Datensatz (48) zu ermitteln,
b3) den ermittelten Anzeigeinhalt (56) zur Anzeige am Anzeigegerät (8a-g) bereitzustellen.

10. Anzeigesystem (6) nach Anspruch 9, bei dem der Steuerserver (16) dazu ausgebildet ist,
- anhand des Inhaltkriteriums (54) eine die Wegrichtung (17) vom Anzeigeort (44) zum Veranstaltungsort (38) anzeigende Information als Anzeigeinhalt (56) für das Anzeigegerät (8a-g) zu ermitteln, und
- die Wegrichtung (17) anhand eines Routing-Algorithmus aus dem Geländeplan (36) und dem Anzeigenplan (42) zu ermitteln.

11. Anzeigesystem (6) nach einem der Ansprüche 9 bis 10, bei dem alle Anzeigegeräte (8a-g) jeweils einer von mindestens zwei Typklassen (18a,b) zugeordnet sind und mindestens ein Ortskriterium (52) und/oder Inhaltskriterium (54) für alle Anzeigegeräte (8a-g) einer bestimmten Typklasse (18a,b) gleich gewählt ist.

12. Anzeigesystem (6) nach einem der Ansprüche 9 bis 11, mit einem
- Steuerserver (16), der ausgebildet ist, um den Anzeigeinhalt (56) in Form von einen Bildinhalt (64) abstrakt beschreibenden Metadaten (58) bereitzustellen, und mit einem
- Darstellungsrechner (10), der ausgebildet ist, die Metadaten (58) anhand einer Layoutvorlage (66) in den konkreten graphischen Bildinhalt (64) zu überführen.

13. Anzeigesystem (6) nach einem der Ansprüche 9 bis 14, mit einem
- Darstellungsrechner (10), der ausgebildet ist, mehrere, vom Steuerserver (16) ermittelte Anzeigeinhalte (56) zu speichern, und
- anhand eines Zeitkriteriums (68) und der aktuellen Zeit einen der Anzeigeinhalte (56) zur aktuellen Anzeige am Anzeigegerät (8a-g) auszuwählen.

14. Verwendung eines Routing-Algorithmus in einem Verfahren zum Betreiben einer Mehrzahl von an jeweiligen Anzeigeorten (44) platzierten Anzeigegeräten (8a-g) eines Anzeigesystems (6), die über ein Veranstaltungsgelände (2) mit verschiedenen Veranstaltungsbereichen (4a-e) an Veranstaltungsorten (38) verteilt sind, wobei im Veranstaltungsgelände (2) verschiedene Veranstaltungen stattfinden, bei dem:
a) die Ortsdaten aller Veranstaltungsorte (38) in einem Geländeplan (36) gespeichert werden,
b) die Ortsdaten aller Anzeigeorte (44) in einem Anzeigenplan (42) gespeichert werden,
c) für jede Veranstaltung deren Veranstaltungsort (4a-e), Veranstaltungszeit und Veranstaltungsinhalt in einem Datensatz (48) einer Veranstaltungsliste (46) gespeichert werden,
d) wenigstens bei jeder Veränderung (50) in einem der Datensätze (48) automatisch für jedes der Anzeigegeräte (8a-g) folgende Schritte ausgeführt werden:
d1) anhand mindestens eines Ortskriteriums (52) wird durch Auswertung des Veranstaltungsorts (38) und des Anzeigeorts (44) ermittelt, ob zumindest ein Teil der Informationen des Datensatzes (48) auf dem bestimmten Anzeigegerät (8a-g) anzuzeigen ist,
d2) anhand mindestens eines Inhaltskriteriums (54) wird eine die Wegrichtung (17) vom Anzeigeort (44) zum Veranstaltungsort (38) anzeigende Information als Anzeigeinhalt (56) für das bestimmte Anzeigegerät (8a-g) aus dem Datensatz (48) ermittelt, und die Wegrichtung (17) vom Anzeigeort (44) zum Veranstaltungsort (38) anhand eines Routing-Algorithmus aus dem Geländeplan (36) und dem Anzeigenplan (42) ermittelt,
e) der ermittelte Anzeigeinhalt (56) zur Anzeige am Anzeigegerät (8a-g) bereitgestellt wird.

15. Verwendung einer Grafik-Render-Engine (62) in einem Anzeigesystem (6) mit einer Mehrzahl von an jeweiligen Anzeigeorten (44) platzierbaren Anzeigegeräten (8a-g), die über ein Veranstaltungsgelände (2) mit verschiedenen Veranstaltungsorten (4a-e) an Veranstaltungsorten (38) verteilt sind, wobei das Veranstaltungsgelände (2) für das Stattfinden verschiedener Veranstaltungen dient,
a) mit einer Datenbank (30), enthaltend:
i) einen Geländeplan (36), in dem die Ortsdaten aller Veranstaltungsorte (38) gespeichert sind,
ii) einen Anzeigenplan (42), in dem die Ortsdaten aller Anzeigeorte (44) gespeichert sind,
iii) eine Veranstaltungsliste (46), in der für jede Veranstaltung deren Veranstaltungsort (4a-e), Veranstaltungszeit und Veranstaltungsinhalt in einem Datensatz (48) gespeichert sind,
b) und mit einem Steuerserver (16), der dazu ausgebildet ist, um automatisch wenigstens bei jeder Veränderung (50) in einem der Datensätze (48) für jedes der Anzeigegeräte (8a-g):
b1) anhand mindestens eines Ortskriteriums (52) durch Auswertung des Veranstaltungsorts (38) und des Anzeigeorts (44) zu ermitteln, ob zumindest ein Teil der veränderten Informationen des Datensatzes (48) auf dem bestimmten Anzeigegerät (8a-g) anzuzeigen ist,
b2) anhand mindestens eines Inhaltskriteriums (54) einen Anzeigeinhalt (56) für das bestimmte Anzeigegerät (8a-g) aus dem Datensatz (48) zu ermitteln,
b3) den ermittelten Anzeigeinhalt (56) zur Anzeige am Anzeigegerät (8a-g) in Form von einen Bildinhalt (64) abstrakt beschreibenden Metadaten (58) bereitzustellen,
c) und mit einem Darstellungsrechner (10), der ausgebildet ist, die Metadaten (58) anhand einer Layoutvorlage (66) mit Hilfe einer Grafik-Render-Engine (62) in den konkreten graphischen Bildinhalt (64) zu überführen.
